# EUROPÄISCHE PATENTANMELDUNG

(11) **EP 4 349 882 A1**
(43) Veröffentlichungstag der Anmeldung: **10.04.2024**
(21) Anmeldenummer: 23190748.6
(22) Anmeldetag: 10.08.2023
(51) Int. Cl.: C08G 77/18, C08G 77/06, C08K 5/057

(54) **HERSTELLUNG VON ALKOXYSILOXANEN**

(30) Priorität: 12.08.2022 EP 22190104
(71) Anmelder: Evonik Operations GmbH, 45128 Essen (DE)
(72) Erfinder: Knott, Wilfried, 45355 Essen (DE); Dudzik, Horst, 45326 Essen (DE); Henning, Frauke, 45259 Essen (DE)
(74) Vertreter: Evonik Patent Association

(57) **Zusammenfassung**

Verfahren zur Herstellung von einem oder mehreren Alkoxysiloxanen durch thermische Umsetzung von mindestens einem Siloxangrundkörper mit mindestens einem Alkalimetallalkoholat und mindestens einem Alkohol, wobei man in einem ersten Schritt den mindestens einen Siloxangrundkörper unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, und danach die aus dem ersten Schritt hervorgegangene Reaktionsmischung in einem zweiten Schritt durch Hinzufügen mindestens einer Brönstedtsäure neutralisiert, vorzugsweise feste Bestandteile abfiltriert und danach das oder die Alkoxysiloxane durch thermisches Abtrennen flüchtiger Verbindungen isoliert, wobei der mindestens eine Siloxangrundkörper ausgewählt ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle, Polydimethylsiloxandiole und α,ω-Divinytsitoxane.

## Beschreibung

Die Erfindung liegt auf dem Gebiet der Silikone. Sie betrifft insbesondere ein Verfahren zur Herstellung von einem oder mehreren Alkoxysiloxanen durch die Umsetzung von mindestens einem Siloxangrundkörper mit mindestens einem Alkalimetallalkoholat und mindestens einem Alkohol, welche ohne Entfernung von etwaig auftretendem Wasser aus der Reaktionsmischung erfolgt. Weiterhin betrifft sie Alkoxysiloxane, erhältlich nach solchem Verfahren sowie die Verwendung solcher Alkoxysiloxane.

Alkoxysiloxane sind Siloxane, welche eine oder mehrere, vorzugsweise zwei, Alkoxygruppen aufweisen. Lineare α,ω-Diatkoxysitoxane sind besonders bevorzugte Alkoxysiloxane im Sinne dieser Erfindung, ganz besonders bevorzugt sind lineare α,ω-Diatkoxypotydimethytsitoxane.

Methoden zur Herstellung von Alkoxysiloxanen sind bekannt. Insbesondere sind vielfältige Methoden referiert, die die Substitution von am Silizium gebundenen, reaktiven Gruppen durch Alkoxyreste beschreiben. Ohne auf diese zum Teil sehr alten Synthesewege, die sich im Wesentlichen des Austausches von Chlor beziehungsweise auch Wasserstoffs (dehydrogenative Route) bedienen im Detail einzugehen, sei auf W. Noll, Chemie und Technologie der Silicone, Verlag Chemie GmbH, Weinheim, (1960), S. 60-61 als eine die präparativen Optionen beleuchtende Referenz verwiesen, in der die Umwandlung reaktiver, dort allerdings am silanischen Silizium gebundener Gruppen in Alkoxysilane diskutiert wird.

Eine deutlich geringere Anzahl an Arbeiten beschäftigt sich hingegen mit dem Zugang zu Alkoxysiloxanen ausgehend von nichtfunktionellen Siloxanen.

Bailey et al. beanspruchen mit der US 2.881.199 die Herstellung alkoxygruppentragender Silane sowie auch alkoxygruppentragender Di- und Trisiloxane durch säurekatalysierte Umsetzung von zyklischen Siloxanen mit Alkoholen unter Rückflussbedingungen und unter kontinuierlicher, azeotroper Entfernung des bei der Reaktion gebildeten Wassers. Bedingt durch die saure Reaktionsführung gewärtigen die Autoren bei den sehr langsam verlaufenden Umsetzungen (24 Stunden) zudem eine unerwünschte Veretherungsreaktion des eingesetzten Alkohols.

Gleichfalls säurekatalysiert setzen Zhurkina et al. (Zh. Obshch. Khim. 1989, 59, 1203-1204) Ethylorthoameisensäureester mit Octamethylcyclotetrasiloxan unter milden Bedingungen (16-20°C) zu einer Diethoxyoctamethyltetrasiloxan enthaltenden Reaktionsmischung um und isolieren dieses Siloxan durch anschließende Vakuumdestillation. Inwieweit der Einsatz von Ethylorthoameisensäureester als exotischem Wasserabfangreagenz akzeptable Ausbeuten gestattet, ist nicht referiert, jedoch der Hinweis gegeben, dass Ameisensäureethylester unter diesen Bedingungen nicht reagiert.

Auch basisch katalysierte Siloxanumlagerungen sind bekannt.

So richtet sich die Lehre der US 3,477,988 auf die basisch katalysierte Umlagerung von Siloxanen in Gegenwart von Organophosphorverbindungen wie insbesondere Hexamethylphosphorsäuretriamid und schließt dabei sogar die Nutzbarmachung höhermolekularer Hydrolysate, Gummis und Kautschuke mit ein. Die Notwendigkeit, aprotisch-polare Lösungsmittel wie das krebserzeugende Hexamethylphosphorsäuretriamid einsetzen zu müssen, steht einer technischen Verwendung der Lehre entgegen.

Chang et al. (J. Polym. Res. 2005, 12, 433-438) haben sich der nukleophilen Spaltung quervernetzter Polysiloxane zu Gewinnung zyklischer Siloxanmonomere gewidmet, wobei sie zunächst ein vernetztes, gefülltes Polydimethylsiloxan wahlweise in der jeweils 4 bis 5fachen Menge an Tetrahydrofuran, Toluol oder Diethylamin bei Raumtemperatur über Nacht quellen ließen und die so gequollenen Proben danach mit separat vorbereiteten, homogenen Lösungen von Kaliumhydroxid in Dimethylamin beaufschlagt und unter Rühren bei Raumtemperatur gelöst haben. In Zeiträumen von 0,4 bis 4 Stunden beobachteten die Autoren komplette Auflösung der Silikongummibestandteile. Die nach 25 Stunden Reaktionszeit bestimmten Ausbeuten an zyklischen Produkten lagen im Bereich von 10 Gew.-% bis 77 Gew.-%., wobei die Ausbeute des in Diethylamin durchgeführten Auflösungsexperiments die Ausbeuten übertraf, die für die in Tetrahydrofuran, Tetrahydrofuran/Toluol und Toluol gefahrenen Versuche bestimmt wurden.

Wang und Lin widmen sich in K' o Hsueh Tung Pao, 1959, 3, 92-93 dem Abbau von Polyorganosiloxanen durch Butanolyse, wobei sie Natriumhydroxid als Spaltreagenz verwenden und ein Butanol-Wasser-Azeotrop kontinuierlich aus dem Reaktionssystem auskreisen. Das Dilemma einer in effektiver Konkurrenz zur Alkoxyfunktionalierung verlaufenden, alkalisch induzierten Polymerisation, die - weil sie ungeregelt - sowohl kurze als auch langkettige Spaltprodukte hervorbringt, können die Autoren nicht auflösen. Vornokov und Shabarova beschreiben in Zh. Obshch. Khim.1959,29,1528-1534 (Russian Journal of General Chemistry 1959, 29, 1528-1534) die Herstellung von Organoalkoxysilanen durch Spaltung von Organosiloxanen mit Alkoholen unter basischen Bedingungen, wobei Alkalimetallhydroxide, Alkalimetallalkoholate oder die Alkalimetalle selbst zum Einsatz gelangen.

Die Autoren interpretieren die Reaktion des Organosiloxans mit Alkohol als eine Gleichgewichtreaktion, bei der es darauf ankommt, Reaktionswasser azeotrop oder unter Zuhilfenahme eines inerten, wasserunlöslichen Lösungsmittels oder aber präferiert unter Hinzufügung von Tetraalkoxysilanen als wasserentziehende Mittel aus dem Reaktionssystem zu entfernen. Ohne Nutzung wasserentziehender Reagenzien ist hiernach weder die Herstellung von Alkoxysilanen möglich, die sich von Alkoholen mit Siedepunkten kleiner 90°C herleiten, noch das Erzielen hoher Ausbeuten an Alkoxysilanen.

Für die Herstellung von Alkoxysiloxanen weist die Publikation hingegen keinen Lösungsweg auf, denn für den Fachmann verständlich würde insbesondere der Verbleib hochsiedender Tetraalkoxysilane (zum Beispiel Tetraethoxysilan Kp. 168°C) sowie der daraus entstehenden Kondensationsprodukte einen erheblichen Trenn- und Reinigungsaufwand nach sich ziehen.

Petrus et al. beschäftigen sich mit der solvothermalen Alkoholyse von quervernetzten Silikonkautschukabfällen (Macromolecules 2021, 54, 2449-2465) und beschreiben unter anderem die Auflösung geschredderten Silikongummis im Hochdruckreaktor mit Hilfe von n-Octanol im Temperaturbereich zwischen 180°C und 240°C und bei Reaktionszeiten zwischen 16 und 18 Stunden.

Die Umsätze der Reaktion sind im Bereich von 22% bis 80% angegeben und die Analytik weist aus, dass Alkoxyoligosiloxane enstanden sind. Zur Interpretation des zunächst überraschenden Befundes, dass ein vernetztes Siloxan scheinbar unkatalysiert einer Alkoholyse zugänglich ist, nehmen Petrus et al. an, dass die hohen Aufschlusstemperaturen oberhalb von 200°C in Kombination mit Feuchtigkeit Säurespuren aus dem peroxidisch vernetzten Silikonkautschuk freisetzen, die dann die Spaltung der Si-O-Si-Bindungen katalysieren.

Der Zielsetzung verschrieben, die besagte Alkoholysereaktion effektiver, das heißt, bei verkürzten Reaktionszeiten, erniedrigten Temperaturen und zudem bei geringer Katalysatorbeladung durchzuführen, setzten Petrus et al. (ibid.) Alkalimetallaryloxide gestützt durch den Methylsalicylatoliganden, sowie Magnesium- und Zinkaryloxide sowie gemischte Metallaryloxide mit Methylsalicylatoliganden als Katalysatoren ein. Als bester Komplex bei dieser Untersuchung erwies sich das Magnesium-Natrium-Kalium-Aryloxid [Mg₂M'₂ (MesaIO)₆(THF)₄] mit M' = Na, K und MesaIO als dem Methylsalicylato-Liganden, mit dem die Herstellung von Dioctanoxydimethylsilan und 1,3-Dioctanoxy-1,1,3,3-tetramethyldisiloxan in Ausbeuten von 79% bzw. 17% binnen 2 Stunden bei 220°C Reaktionstemperatur gelingt.

Des Weiteren beschreiben Okamoto et al. in Appl.Catalysis A: General 261 (2004), 239 -245 die Depolymerisation von Polysiloxanen und von mit SiOz-gefüllten Silikongummi mit Dimethylcarbonat und Methanol zu Methoxytrimethylsilan und Dimethoxydimethylsilan unter Freisetzung von Kohlendioxid, wobei als Katalysatoren neben Alkalimetallhalogeniden auch Kaliumhydroxid und Natriummethylat zum Einsatz kommen. Zur Durchführung wird ein Autoklav benötigt, da man die Depolymerisation bei 180°C über einen Zeitraum von 15 Stunden durchführt. Der alleinige Einsatz sowohl von Methanol als auch von Dimethylcarbonat lässt die Depolymerisation nur zu 2 bzw. 3 Prozent stattfinden. Die Autoren schlussfolgern aus ihren Versuchen, dass sowohl Dimethylcarbonat als auch Methanol zugegen sein müssen, um Polysiloxane zu depolymerisieren. Die Anforderung sowohl eine druckfeste Apparatur als auch ein komplexes Aufschlusssystem sowie darüber hinaus noch lange Reaktionszeiten bei hoher Temperatur zu benötigen, machen diese Route für eine technische Umsetzung unattraktiv.

In Sicht aller dieser Anstrengungen definiert sich die zu lösende technische Aufgabe dadurch, einen praktikablen, dabei wenig zeitintensiven und dabei möglichst einfachen synthetischen Zugang zu Alkoxysiloxanen ausgehend von Siloxangrundkörpern zu finden, der auf komplexe Stoffsysteme wie insbesondere mehrkomponentige Lösungsmittelgemische sowie auf exotische Katalysatoren und möglichst auch auf Spezialapparaturen, verzichten kann.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Unter Siloxangrundkörpern im Sinne der Erfindung werden insbesondere solche Siloxane verstanden, die überwiegend aus D-Einheiten aufgebaut sind, vorzugsweise zum Beispiel Siloxanzyklen wie Hexamethylcyclotrisiloxan (D₃), Octamethylcyclotetrasiloxan (D₄), Dekamethylcyclopentasiloxan (D₅), Dodekamethylcyclohexasiloxan (D₆) und/oder beliebige Mischungen derselben. Ebenfalls werden unter dem Begriff der Siloxangrundkörper im Sinne vorliegender Erfindung insbesondere auch Mischungen zyklischer-verzweigter Siloxane vom D/T-Typ, vorzugsweise hergestellt wie in der EP 3321304 A1, der EP 3401353 A1 oder der EP 3467006 A1 beschrieben, verstanden, die vorzugsweise im Gemisch mit Siloxanzyklen, wie z.B. Octamethylcyclotetrasiloxan (D₄), Dekamethylcyclopentasiloxan (D₅) und/oder Dodekamethylcyclohexasiloxan (D₆) nach erfindungsgemäßer Verarbeitung verzweigte Alkoxygruppen tragende Siloxane hervorbringen.

Zyklisch-verzweigte Siloxane vom D/T-Typ sind zyklische Siloxane, die aus D- und T-Einheiten aufgebaut sind. Mischungen zyklischer-verzweigter Siloxane vom D/T-Typ sind demnach Gemische zyklischer Siloxane, welche aus D- und T-Einheiten aufgebaut sind. Mischungen zyklischer-verzweigter Siloxane vom D/T-Typ sind in der Patentliteratur beschrieben.

So beschreibt z.B. EP 3401353 A1 Mischungen zyklischer-verzweigter, D- und T-Einheiten aufweisender Siloxane und ein Verfahren zu deren Herstellung, umfassend (a) eine sauer katalysierte Äquilibrierung von Trialkoxysilanen mit Siloxancyclen und/oder α,ω- Dihydroxypolydimethylsiloxan in Anwesenheit von mindestens einem sauren Katalysator und danach (b) eine durch Wasserzugabe eingeleitete Hydrolyse- und Kondensationsreaktion sowie Zugabe eines Siliciumhaltigen Lösemittels, gefolgt von, (c) einer destillativen Abtrennung des freigesetzten Alkohols, im System vorhandenen Wassers und Silicumhaltigen Lösemittels sowie einer Neutralisation oder Abtrennung des sauren Katalysators und ggf. Abtrennung womöglich gebildeter Salze, wobei das Silicium-haltige Lösungsmittel vorzugsweise die isomeren Siloxancyclen Oktamethylcyclotetrasiloxan (D4), Dekamethylcyclotetrasiloxan (D5) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

EP 3 321 304 A1 beschreibt Mischungen zyklischer-verzweigter, D- und T-Einheiten aufweisender Siloxane und ein Verfahren zu deren Herstellung, wobei ein Trialkoxysilan in einem Lösemittel mit Siloxancyclen und/oder α,ω-Dihydroxy-poiydimethylsiloxan unter Zugabe von Wasser und in Anwesenheit von mindestens einem sauren Katalysator umgesetzt wird.

EP 3 467 006 A1 beschreibt Mischungen zyklischer-verzweigter, D- und T-Einheiten aufweisende Siloxane und ein Verfahren zu deren Herstellung umfassend
(a) eine sauer katalysierte Äquilibrierung von Trialkoxysilanen mit Siloxancyclen und/oder α,ω-Dihydroxy-polydimethylsiloxan in Anwesenheit von mindestens einem sauren Katalysator und danach
(b) eine durch Wasserzugabe eingeleitete Hydrolyse- und Kondensationsreaktion gefolgt von der Zugabe eines Silicium-haltigen Lösemittels,
(c) mit einer anschließenden destillativen Abtrennung des freigesetzten Alkohols und Anteilen des im System vorhandenen Wassers,
(d) mit anschließender Zugabe von Toluol und Auskreisen restlichen im Stoffsystem verbliebenen Wassers,
(e) gefolgt von einer Neutralisation oder Abtrennung des sauren Katalysators und gegebenenfalls Abtrennung womöglich gebildeter Salze,
(f) mit abschließender destillativer Entfernung noch im System vorhandenen Toluols, wobei das Silicium-haltige Lösungsmittel vorzugsweise die isomeren Siloxancyclen Oktamethylcyclotetrasiloxan (D₄), Dekamethylcyclopentasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

Gleichfalls können auch Polydimethylsiloxandiole sowie Silikonöle (vorzugsweise solche Silikonöle, die mindestens 100 D-Einheiten aufweisen) als bevorzugt einsetzbare Siloxangrundkörper betrachtet werden, wobei der Einsatz von Silikonölen ebenfalls bevorzugt, aber weniger bevorzugt ist, da sie - in Abhängigkeit von ihrer jeweiligen mittleren Kettenlänge - einen Anteil an Trimethylsilylgruppen in das Reaktionssystem eintragen können.

Erstaunlicherweise wurde nun gefunden, dass die o.g. Aufgabe durch den Gegenstand der Erfindung gelöst wird. Gegenstand der Erfindung ist ein Verfahren zur Herstellung von einem oder mehreren Alkoxysiloxanen durch thermische Umsetzung von mindestens einem Siloxangrundkörper mit mindestens einem Alkalimetallalkoholat und mindestens einem Alkohol, wobei man
a) in einem ersten Schritt mindestens einen Siloxangrundkörper unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz von mit Wasser Azeotrope bildenden Solventien und/oder ohne den Einsatz weiterer, wasserentziehender Mittel, und
b) die aus dem ersten Schritt a) hervorgegangene Reaktionsmischung in einem zweiten Schritt durch Hinzufügen mindestens einer Brönstedtsäure und gegebenenfalls unter Hinzufügen von mindestens einem Solvens neutralisiert, vorzugsweise feste Bestandteile abfiltriert und
c) danach das oder die Alkoxysiloxane durch thermisches Abtrennen flüchtiger Verbindungen isoliert,
wobei der mindestens eine Siloxangrundkörper ausgewählt ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle (vorzugsweise solche Silikonöle, die mindestens 100 D-Einheiten aufweisen), Polydimethylsiloxandiole und α,ω-Divinylsiloxane. Es können ein oder mehrere der vorgenannten Siloxangrundkörper zum Einsatz gelangen.

Erstaunlicherweise und damit auch in vollkommener Abkehr von Vornokov's Lehre (s.o.), die auf Alkoxysilane abstellt, benötigt das erfindungsgemäße Verfahren zur Herstellung von Alkoxysiloxanen keinerlei wasserinkompatible Lösungsmittel als Azeotropbildner oder gar wasserentziehende Substanzen wie zum Beispiel Tetraalkoxysilane. Die Umsetzung von mindestens einem Siloxangrundkörper mit mindestens einem Alkohol und mindestens einem Alkalimetallalkoholat in dem ersten Schritt (a) erfolgt erfindungsgemäß ohne Entfernung von etwaig auftretendem Wasser aus der Reaktionsmischung.

Erfindungsgemäß setzt man mindestens einen Siloxangrundkörper in einem ersten Schritt unter guter Durchmischung mit mindestens einem Alkohol und mindestens einem Alkalimetallalkoholat unter Wärmeeintrag um. Die Umsetzung kann gemäß einer bevorzugten Ausführungsform der Erfindung unter Normaldruck, das heißt, bei einem auf der Apparatur wirkenden, äußeren Luftdruck von 1.013,25 hPa durchgeführt werden. Vorteilhaft für die erzielbare Raum-Zeit-Ausbeute an Alkoxysiloxan, das heißt, den Anteil eingebrachter Alkoxyfunktionalität bezogen auf die Gesamtheit aller Si-Einheiten pro Zeit und daher auch besonders bevorzugt, kann man gemäß einer bevorzugten Ausführungsform der Erfindung den ersten Schritt insbesondere beim Einsatz derjenigen Alkohole, die Siedepunkte unterhalb von 100°C aufweisen, unter Überdruckbedingungen in einem druckfesten Reaktor durchführen. Der dabei verzeichnete Druckaufbau ist autogener Natur und geht auf den Dampfdruck der darin involvierten Systemkomponenten zurück. Falls gewünscht, kann der Reaktor zudem noch mit einem optionalen Inertgaspolster beaufschlagt werden.

Unter Alkalimetallalkoholat werden im Rahmen dieser Erfindung vorzugsweise Verbindungen der allgemeinen Formel:

[M⁺][OR⁻]

verstanden, wobei
- M: ausgewählt ist aus der Reihe der Alkalimetalle Li, Na oder K, bevorzugt Na oder K und wobei
- R: einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt; dabei ist gemäß einer bevorzugten Ausführungsform der Erfindung das mindestens eine Alkalimetallalkoholat aus den vorgenannten Verbindungen ausgewählt. Am meisten bevorzugt ist der Einsatz von Kaliumethanolat, Natriumethanolat, Kaliummethanolat und/oder Natriummethanolat. Es können ein oder mehrere Alkalimetallalkoholate eingesetzt werden.

Zu den bekannten Verfahren der Herstellung von Alkoholaten gehört die Chloralkali-Elektrolyse nach dem Amalgam-Verfahren, bei der Natriumamalgam mit Alkohol umgesetzt wird [vgl. z. B. Chemical and Engineering News 22, 1903-06 (1944)].

Eine weitere bekannte Methode ist die Herstellung von Alkoholaten aus einem Alkalimetall und einem Alkohol bzw. aus einem Alkalihydroxid und einem Alkohol. Die Alkoholatproduktion aus einem Alkalimetall und einem tertiären Alkohol ist z. B. aus DE-23 33 634 (Dynamit Nobel) oder DE-26 12 642 (Degussa) bekannt. Die Herstellung eines Alkoholats aus einem Alkalihydroxid und einem tertiären Alkohol ist ebenfalls bekannt. Die erste Verfahrensvariante erfordert den Einsatz von teurem Alkalimetall, und bei der zweiten Variante ausgehend vom Alkalihydroxid muss das bei der Umsetzung entstehende Wasser destillativ entfernt werden, was den entsprechenden hohen thermischen Aufwand erfordert.

Der Lehre der DE-A-33 46 131 folgend, werden Alkalialkoholate elektrolytisch aus Salzen hergestellt, wobei eine Elektrolysezelle, bei der eine Kationenaustauschmembran die Elektrodenräume trennt, eingesetzt wird. In DE-42 33 191.9-43 wird ein Verfahren beschrieben, dass die Herstellung eines Alkalialkoholats aus einem Salz durch Elektrodialyse ermöglicht.

Ebenfalls sind Verfahren zur Herstellung von Sonderalkoholaten, wie zum Beispiel den Alkoholaten höherer und/oder mehrwertiger Alkohole vereinzelt beschrieben.

Alkoholate höherer und/oder mehrwertiger Alkohole lassen sich bekanntlich grundsätzlich durch Umalkoholisieren, d. h., durch Substitution des Alkoholatrestes niederer Alkoholate ROM durch Umsetzung mit höheren Alkoholen R'OH (wobei R und R' Alkylreste unterschiedlicher Kohlenstoffkettenlänge sind und M ein Metallkation bezeichnet) in einem flüssigen Reaktionsgemisch bei geeigneten Temperatur - und Druckverhältnissen herstellen. Diese Umsetzung wird im Laborjargon auch als "Umkochen" bezeichnet. Die Lage des Gleichgewichts ROM + R'OH ⇔ ROH + R'OM hängt von der Acidität der beiden Alkohole ab, die in der Reihenfolge Methanol > primäre > sekundäre > tertiäre Alkohole abnimmt [R. T. Mclver und J. A. Scott, J. American Chem. Soc. 96 (1973) 2706]. Daher soll die Herstellung der Alkoholate sekundärer Alkohole auf diesem Wege nur in Ausnahmefällen möglich sein und die Herstellung der Alkoholate tertiärer Alkohole durch Umalkoholisierung gar nicht gelingen ["Methoden der Organischen Chemie" (1963) Bd. 6/2, S. 13]. Jedoch wurde die Herstellung von Alkoholaten durch Umkochen in DE-1 254 612 und in DE-27 26 491 (beide von Dynamit Nobel) auch für höhere Alkohole beschrieben. GB-1 143 897 (Metallgesellschaft) beschreibt die Umsetzung eines einwertigen Alkalialkoholats mit einem bis zu sechs Hydroxylgruppen enthaltenden C₂- bis C₁₈-Alkohol oder-Phenol, wobei als Lösungsmittel ein Überschuss an einwertigem Alkohol und/oder ein Kohlenwasserstoff eingesetzt wird.

Das Umkochen führt aber immer zur Bildung des leichtsiedenden Alkohols ROH (z. B. Methanol), der zur Isolierung des gewünschten Alkoholats - gegebenenfalls zusätzlich zum nicht umgesetzten höheren Alkohol R'OH - aus dem Reaktionsproduktgemisch zum Teil mit erheblichem thermischen Aufwand abgetrennt werden muss.

Abseits dieser thermisch geführten Gleichgewichtsverschiebungen lehrt die EP0776995 (B1) ein Verfahren zur Herstellung von Alkoholaten unter dem Einfluss eines elektrischen Feldes, wobei ein Alkohol durch Zufuhr von Metallionen in das gewünschte Alkoholat umgesetzt wird und die Metallionen selbst aus der elektrochemischen Zerlegung eines anderen Alkoholates in dem elektrischen Feld stammen. Die Alkoholatbildung und die -zerlegung erfolgen in räumlich durch lonenaustauschmembranen getrennten Kammern.

Die insbesondere auf den beschriebenen Wegen gewonnenen Alkalimetallalkoholate sind kommerziell sowohl als Feststoffe als auch in Form ihrer alkoholischen Lösungen erhältlich.

Bevorzugt kann die thermische Umsetzung des mindestens einen Siloxangrundkörpers im ersten Schritt (a) vorzugsweise bei Temperaturen zwischen 50°C und 200°C, bevorzugt zwischen 60°C und 150°C, insbesondere zwischen 64°C und 120°C und in einem Zeitraum von vorzugsweise 1 bis 12 Stunden, bevorzugt in einem Zeitraum von 2 bis 8 Stunden erfolgen und das jeweils bevorzugt lösemittelfrei.

Das mindestens eine Alkalimetallalkoholat wird vorzugsweise in Gesamt-Mengen von 1 bis 10 Massen-%, bevorzugt von 2 bis 7 Massen-%, besonders bevorzugt von 3 bis 6 Massen-% bezogen auf die Gesamt-Menge des mindestens einen Siloxangrundkörpers eingesetzt. Dies entspricht einer bevorzugten Ausführungsform der Erfindung.

Der mindestens eine Alkohol ist vorzugsweise ausgewählt aus der Gruppe der C₁- bis C₁₀- Alkanole. Besonders bevorzugt sind Methanol, Ethanol, 1- Propanol, Isopropanol, 1-Butanol, 2-Butanol, isoButanol, Pentanole, Hexanole, Heptanole, Octanole, Nonanole und/oder Dekanole, jeweils umfassend auch deren Isomere, besonders bevorzugt sind Methanol und/oder Ethanol. Es können ein oder mehrere Alkohole eingesetzt werden.

Vorzugsweise wird der mindestens eine Alkohol in Gesamt-Mengen von 10 bis 200 Massen-%, bevorzugt von 20 bis 100 Massen-%, besonders bevorzugt in Mengen von 30 bis 80 Massen-% bezogen auf die Gesamt-Masse des mindestens einen Siloxangrundkörpers eingesetzt.

Bei der betrieblichen Umsetzung des erfindungsgemäßen Verfahrens insbesondere in explosionsgeschützten Betriebsteilen kann die Handhabung und Zudosierung festen Alkalimetallalkoholats in den Umsetzungsreaktor eine technische Herausforderung bedeuten. Daher kann gemäß einer weiteren besonders bevorzugten Ausführungsform der Erfindung das mindestens eine Alkalimetallalkoholat in Form einer alkoholischen Lösung und dann vorzugsweise gelöst in dem zur Darstellung des Alkoholats verwendeten, wasserfreien Alkohol, eingesetzt werden.

Erfindungsgemäß wird die aus dem ersten Schritt (a) hervorgehende Reaktionsmischung in einem zweiten Schritt (b) durch Hinzufügen von mindestens einer Brönstedtsäure und gegebenenfalls unter Hinzufügen von mindestens einem Solvens neutralisiert. Es können dabei also eine oder mehrere Brönstedtsäuren eingesetzt werden. Dabei können vorzugsweise wasserfreie Mineralsäuren (wie vorzugsweise wasserfreie Schwefelsäure und/oder wasserfreie Perchlorsäure) und/oder besonders bevorzugt wasserfreie organische Säuren (wie vorzugsweise wasserfreie Essigsäure) zur Neutralisation eingesetzt werden.

Im Falle der Verwendung von vorzugsweise wasserfreien Mineralsäuren bemisst man deren Zugabemenge vorzugsweise so, dass stöchiometrische Äquivalenz bezogen auf das insgesamt eingesetzte mindestens eine Alkalimetallalkoholat erzielt wird. Bei Verwendung der deutlich schwächeren, wasserfreien organischen Säuren (wie z.B. wasserfreie Essigsäure) wählt man vorzugsweise einen deutlichen stöchiometrischen Überschuss an Säure bezogen auf das insgesamt eingesetzte, mindestens eine Alkalimetallalkoholat. Dieser wird vorzugsweise bis zum 50%igen Überschuss bemessen.

Die Einsatzmenge der insgesamt eingesetzten mindestens einen Brönstedtsäure wird vorzugsweise also so gewählt, dass sie von der stöchiometrischen Äquivalenz bis zum 50%igen stöchiometrischen Überschuss reicht, jeweils bezogen auf das insgesamt eingesetzte mindestens eine Alkoholat.

Falls die aus dem erfindungsgemäßen Neutralisationsschritt absehbare Salzmenge einer leichten Filtration im Wege steht, so ist vorzugsweise der Einsatz von mindestens einem Solvens vorzusehen. Es können optional ein oder mehrere Solventien eingesetzt werden. Als optionale ein oder mehrere Solventien eignen sich bevorzugt solche Lösungsmittel, die selbst mit Blick auf das Reaktionssystem chemisch inert sind und die Verdünnung bzw. Dispersion der Bestandteile der Neutralisationsstufe fördern. Bevorzugt ist das mindestens eine Solvens ausgewählt aus der Gruppe bestehend aus Alkanen und Alkylaromaten. Besonders bevorzugt ist der Einsatz von Alkylaromaten, wie vorzugsweise Toluol und/oder auch der isomeren Xylole sowie deren Gemische.

Auf diese Weise gelangt man einfach und selektiv zu den entsprechenden Alkoxysiloxanen, insbesondere zu solchen, die im ²⁹Si-NMR-Spektrum neben den für -OSi(CH₃)₂OR-Gruppen charakteristischen Signallagen keine für Hydroxypolydimethylsiloxane typischen OSi(CH₃)₂OH-Signale aufweisen. (Beispiel 1 und 2).

Ein weiterer Gegenstand der Erfindung sind demgemäß Alkoxysiloxane, hergestellt gemäß dem erfindungsgemäßen Verfahren.

Die erfindungsgemäß erhaltenen Alkoxysiloxane kann man als Ausgangsmaterialien für polymerisationsaktive Massen und dann bevorzugt unter Zusatz geeigneter Vernetzungskatalysatoren, ggf. noch in Abmischung mit weiteren vernetzenden Silanen und/ oder Siloxanen, ggf. mit Füllstoffen und/ oder Pigmenten gefüllt und/ oder ungefüllt als Kleb - und/oder Dichtstoffe einsetzen.

Ein weiterer Gegenstand der Erfindung liegt demnach in der Verwendung der erfindungsgemäß erhältlichen Alkoxysiloxane als polymerisationsaktive Massen. Bevorzugt ist die Verwendung der erfindungsgemäß erhältlichen Alkoxysiloxane als Kleb - und/oder Dichtstoffe.

Darüber hinaus eignen sich die erfindungsgemäß gewonnen Alkoxysiloxane zum Beispiel auch als Ausgangsmaterialien für die Herstellung von SiOC-verknüpften Polyethersiloxanen durch Umesterung mit Polyetherolen in Gegenwart von Zinkacetylacetonat als Katalysator, wie es in der Europäischen Patentschrift EP3438158 (B1) dargelegt wird.

Ein weiterer Gegenstand der Erfindung liegt dementprechend in der Verwendung der erfindungsgemäß erhältlichen Alkoxysiloxane zur Herstellung von SiOC-verknüpften Polyethersiloxanen durch Umesterung der Alkoxysiloxane mit Polyetherolen in Gegenwart von Zinkacetylacetonat als Katalysator.

Falls vor der hier beschriebenen Weiterverarbeitung zum Beispiel besondere zahlenmittlere Siloxankettenlängen gewünscht sind, können die erfindungsgemäß erhaltenen Alkoxysiloxane optional noch einer nachgeschalteten, vorzugsweise sauer-katalysierten Äquilibrierung unterworfen werden, um die Zielkettenlängen einzustellen.

Gleichfalls ist es z.B. möglich, die erfindungsgemäß erhaltenen Alkoxysiloxane beispielsweise durch die Umsetzung in einem Reaktionsmedium, umfassend Essigsäureanhydrid, Perfluoralkansulfonsäure (insbesondere Trifluormethansulfonsaure) sowie vorzugsweise Essigsäure. unter Auskreisen des jeweiligen Essigsäureesters in die entsprechenden Acetoxygruppen aufweisenden Siloxane, wie in der Patentanmeldung EP 3663346 A1 beschrieben, zu überführen und diese gleichfalls als reaktive Intermediate, wie beispielsweise zur Herstellung von SiOC-verknüpften Polyethersiloxanen oder auch als Ausgangsmaterialien für polymerisationsaktive Massen einzusetzen.

### Beispiele:

Die folgenden Beispiele dienen dem Fachmann allein zur Erläuterung dieser Erfindung und stellen keinerlei Beschränkung des beanspruchten Gegenstandes dar. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Soweit nicht anders gesagt, sind alle Prozentangaben als Angaben in Gewichtsprozenten zu verstehen.

### Beispiel 1 (erfindungsgemäß)

In einem 300-ml-Druckreaktor der Fa. Roth ausgestattet mit einem magnetgekoppelten Rührer, einem Manometer sowie Heizhaube mit integriertem Thermoelement werden 100 g D₅, 12,5 g Methanol sowie 5 g Natriummethanolat eingewogen. Unter Rühren der Reaktionsmasse wird der verschlossene Druckreaktor dann zügig für 4 Stunden auf 120°C erhitzt.

Man lässt den Reaktor erkalten, entspannt und gießt dessen dünnflüssigen Inhalt in ein Becherglas mit Magnetrührkern. Das aus der Reaktion hervorgegangene Intermediat wird bei 22°C unter Rühren vorgelegt und mit 8,3 g wasserfreier Essigsäure (50% stöchiometrischer Überschuss) versetzt. Nach 30 Minuten trennt man die festen Bestandteile über einen Faltenfilter ab. Der isolierte Filterkuchen besteht aus einem feinkörnigen Niederschlag.

Das erhaltene Filtrat wird bei 70°C Sumpftemperatur und einem angelegten Hilfsvakuum < 5 mbar am Rotationsverdampfer von Flüchtigen befreit, wobei man eine leichte Eintrübung des Sumpfes durch Nachfällung beobachtet. Nochmalige Filtration über einen Faltenfilter liefert eine farblose klare Flüssigkeit, deren zugehöriges ²⁹Si-NMR-Spektrum belegt, dass ein lineares α,ω-Dimethoxypolydimethylsiloxan der mittleren Kettenlänge N = 25,6 entstanden ist. Außer den für -OSi(CH₃)₂OCH₃ charakteristischen Signallagen beobachtet man keinerlei -OSi(CH₃)₂OH-Signale.

### Beispiel 2 (erfindungsgemäß)

In einem 500-ml-Vierhalsrundkolben ausgestattet mit KPG-Glasflügelrührer und aufgesetztem Rückflusskühler werden 85 g D₅ zusammen mit 15 g Ethanol unter Rühren vorgelegt und mit 5 g pulverförmigem Kaliumethanolat (KOC₂H₅, Hersteller Evonik Industries) versetzt.

Unter weiterem Rühren lässt man die Mischung bei 80°C über einen Zeitraum von 6 Stunden reagieren. Anschließend kühlt man den Ansatz auf 60°C ab, versetzt mit 5,3 g wasserfreier Essigsäure (50% Überschuss) und rührt für 30 Minuten bei dieser Temperatur. Die Feststoffanteile werden mit Hilfe einer Filterpresse (K 300 Filterscheibe) abgetrennt.

Eine Probe des so gewonnenen, klaren und farblosen Filtrats wird mit Hilfe der ²⁹Si-NMR-Spekroskopie untersucht. Die charakteristischen Signallagen des zugehörigen ²⁹Si-NMR-Spektrums belegen, dass ein lineares α,ω-Dimethoxypolydimethylsiloxan der mittleren Kettenlänge von ca. 22 entstanden ist. Außer den für -OSi(CH₃)₂OC₂H₅ charakteristischen Signallagen beobachtet man keinerlei -OSi(CH₃)₂OH-Signale.

## Patentansprüche

1. Verfahren zur Herstellung von einem oder mehreren Alkoxysiloxanen durch thermische Umsetzung von mindestens einem Siloxangrundkörper mit mindestens einem Alkalimetallalkoholat und mindestens einem Alkohol, wobei man
a) in einem ersten Schritt den mindestens einen Siloxangrundkörper unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz von mit Wasser Azeotrope bildenden Solventien und/oder ohne den Einsatz weiterer, wasserentziehender Mittel, und
b) die aus dem ersten Schritt a) hervorgegangene Reaktionsmischung in einem zweiten Schritt durch Hinzufügen mindestens einer Brönstedtsäure und gegebenenfalls unter Hinzufügen von mindestens einem Solvens neutralisiert, vorzugsweise feste Bestandteile abfiltriert und
c) danach das oder die Alkoxysiloxane durch thermisches Abtrennen flüchtiger Verbindungen isoliert,
wobei der mindestens eine Siloxangrundkörper ausgewählt ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle (vorzugsweise solche Silikonöle, die mindestens 100 D-Einheiten aufweisen), Polydimethylsiloxandiole und α,ω-Divinylsiloxane.

2. Verfahren nach Anspruch 1, **dadurch gekennzeichnet, dass** das mindestens eine Alkalimetallalkoholat der allgemeinen Formel
[M+] [OR⁻]
entspricht, wobei
M ausgewählt ist aus der Reihe der Alkalimetalle Li, Na, K, Rb oder Cs , bevorzugt Na oder K und
R einen linearen, verzweigten oder zyklischen Alkylrest, bevorzugt mit 1 bis 10 Kohlenstoffatomen, besonders bevorzugt mit 1 bis 6 Kohlenstoffatomen und ganz besonders bevorzugt mit 1 oder 2 Kohlenstoffatomen darstellt, insbesondere werden Kaliummethanolat, Kaliumethanolat, Natriummethanolat und/oder Natriumethanolat eingesetzt.

3. Verfahren nach einem der Ansprüche 1 oder 2, **dadurch gekennzeichnet, dass** der mindestens eine Alkohol ausgewählt ist aus linearen, verzweigten oder zyklischen Alkanolen mit 1 bis 18, bevorzugt mit 1 bis 10, ganz besonders bevorzugt mit 1 bis 2 Kohlenstoffatomen, wobei auch Mischungen solcher Alkohole einsetzbar sind, insbesondere werden Methanol und/oder Ethanol eingesetzt.

4. Verfahren nach einem der Ansprüche 1 bis 3, **dadurch gekennzeichnet, dass** die thermische Umsetzung des mindestens einen Siloxangrundkörpers im ersten Schritt (a) bei Temperaturen zwischen 50°C und 200°C, bevorzugt zwischen 60°C und 150°C, insbesondere zwischen 64°C und 120°C, und in einem Zeitraum von vorzugsweise 1 bis 12 Stunden, bevorzugt in einem Zeitraum von 2 bis 8 Stunden vorgenommen wird.

5. Verfahren nach einem der Ansprüche 1 bis 4, **dadurch gekennzeichnet, dass** das mindestens eine Alkalimetallalkoholat in einer Gesamt-Menge von 1 bis 10 mol-%, bevorzugt von 2 bis 7 mol-%, besonders bevorzugt von 3 bis 6 mol-% bezogen auf die Gesamt-Menge des mindestens einen Siloxangrundkörpers eingesetzt wird.

6. Verfahren nach einem der Ansprüche 1 bis 5, **dadurch gekennzeichnet, dass** der mindestens eine Alkohol in Gesamt-Mengen von 10 bis 200 Massen-%, bevorzugt von 20 bis 100 Massen-%, besonders bevorzugt von 30 bis 80 Massen-% bezogen auf die Gesamt-Menge des mindestens einen Siloxangrundkörpers eingesetzt wird.

7. Verfahren nach einem der Ansprüche 1 bis 6, **dadurch gekennzeichnet, dass** als in dem zweiten Verfahrensschritt (b) hinzugefügte mindestens eine Brönstedtsäure wasserfreie Mineralsäure und/oder wasserfreie organische Säure, insbesondere wasserfreie Schwefelsäure, wasserfreie Perchlorsäure und/oder wasserfreie Essigsäure eingesetzt wird.

8. Verfahren nach einem der Ansprüche 1 bis 7, **dadurch gekennzeichnet, dass** in dem zweiten Verfahrensschritt (b) mindestens ein Solvens hinzugefügt wird, vorzugsweise ausgewählt aus der Gruppe bestehend aus Alkanen und Alkylaromaten.

9. Verfahren nach einem der Ansprüche 1 bis 8, **dadurch gekennzeichnet, dass** es zur Herstellung von α,ω-Dimethoxypolydimethylsiloxan und/oder zur Herstellung von α,ω- Dieethoxypolydimethylsiloxan dient.

10. Alkoxysiloxane, erhältlich nach einem der Ansprüche 1 bis 9.

11. Verwendung von Alkoxysiloxanen gemäß Anspruch 10 als polymerisationsaktive Massen, bevorzugt als Kleb - und/oder Dichtstoffe.

12. Verwendung von Alkoxysiloxanen gemäß Anspruch 10 zur Herstellung von SiOC-verknüpften Polyethersiloxanen durch Umesterung der Alkoxysiloxane mit Polyetherolen in Gegenwart von Zinkacetylacetonat als Katalysator.
